# EUROPÄISCHE PATENTSCHRIFT

(11) **EP 2 142 262 B1**
(45) Veröffentlichungstag und Bekanntmachung des Hinweises auf die Patenterteilung: **05.10.2016**
(21) Anmeldenummer: 08716587.4
(22) Anmeldetag: 18.03.2008
(51) Int. Cl.: A62D 5/00

(54) **ADSORPTIONSFILTERMATERIAL FÜR DIE HERSTELLUNG VON ABC-SCHUTZBEKLEIDUNG MIT VERBESSERTER TRAGEPHYSIOLOGIE**
ADSORPTION FILTER MATERIAL FOR PRODUCING ABC PROTECTIVE CLOTHING HAVING IMPROVED WEARING PHYSIOLOGY
MATÉRIAU POUR FILTRE À ADSORPTION POUR LA FABRICATION DE VÊTEMENTS DE PROTECTION ABC À PHYSIOLOGIE AMÉLIORÉE

(30) Priorität: 27.04.2007 DE 102007020412; 06.06.2007 DE 102007026340
(43) Veröffentlichungstag der Anmeldung: 13.01.2010
(73) Patentinhaber: Blücher GmbH, 40699 Erkrath (DE)
(72) Erfinder: BÖHRINGER, Bertram, 42115 Wuppertal (DE); VARGA-MOLNAR, Anna, 40476 Düsseldorf (DE)
(74) Vertreter: Von Rohr Patentanwälte Partnerschaft mbB
(86) Internationale Anmeldenummer: PCT/EP2008/002125
(87) Internationale Veröffentlichungsnummer: WO 2008/135114

(56) Entgegenhaltungen:
- EP-A- 0 525 409
- DE-U1-202005 007 308
- US-A- 6 139 929
- US-A1- 2003 229 936
- US-B1- 6 571 397

## Beschreibung

Die vorliegende Erfindung betrifft ein mehrschichtiges Adsorptionsfiltermaterial mit Schutzfunktion gegenüber chemischen Giften, insbesondere chemischen Kampfstoffen für ABC-Schutzbekleidung zum Tragen auf der Haut als Undergarment (Unterwäsche), nach dem Oberbegriff des Anspruchs 1. Weiterhin betrifft die vorliegende Erfindung ein ABC-Schutzbekleidungsstück zum Tragen auf der Haut, nach Anspruch 13 Schließlich betrifft die vorliegende Erfindung die Verwendung des erfindungsgemäßen Adsorptionsfiltermaterials nach Anspruch 14.

Es gibt eine Reihe von Stoffen, die von der Haut aufgenommen werden und zu schweren körperlichen Schäden führen. Als Beispiele seien das blasenziehende Lost (Gelbkreuz) und das Nervengift Sarin erwähnt. Menschen, die mit solchen Giften in Kontakt kommen können, müssen einen geeigneten Schutzanzug tragen bzw. durch geeignete Schutzmaterialien gegen diese Gifte geschützt werden.

Grundsätzlich sind diesbezüglich im Stand der Technik Schutzanzüge bekannt, welche in Form eines sogenannten Overgarments (Oberwäsche, Oberbekleidung) gewissermaßen als äußerste Bekleidungsschicht getragen werden. Diesbezüglich sind luft- und wasserdampfdurchlässige Schutzanzüge und impermeable Systeme bekannt. Das Konzept, den Schutzanzug nach Art eines Overgarments zu tragen, weist jedoch den Nachteil auf, daß derartige Schutzanzüge oftmals erst im Alarmfall, also bei akut drohender Konfrontation mit chemischen oder biologischen Gift- oder Kampfstoffen, angelegt werden. Sofern derartige Schutzanzüge - beispielsweise unter starken Streßsituationen - nicht rechtzeitig angelegt bzw. angezogen werden, ist die Gefahr einer entsprechenden Vergiftung sehr hoch. Zudem weisen derartige Schutzanzüge nicht immer einen optimalen Tragekomfort auf, da sie mitunter schwer, unflexibel und teilweise nur wenig atmungsaktiv sind.

Weiterhin sind im Stand der Technik Schutzbekleidungssysteme bekannt, welche in Form eines sogenannten Undergarments (Unterwäsche) konzipiert sind. Derartige Systeme weisen grundsätzlich den Vorteil auf, daß sie gewissermaßen permanent, d. h. über die gesamte Einsatzdauer und darüber hinaus, am Körper getragen werden und somit einen kontinuierlichen Schutz gegenüber chemischen oder biologischen Gift- oder Kampfstoffen bieten können. Jedoch sind die im Stand der Technik beschriebenen Schutzbekleidungssysteme, welche in Form von Unterwäsche verwendet bzw. getragen werden, insbesondere hinsichtlich ihres Tragekomforts, aber auch in bezug auf ihre Schutzeigenschaften nicht immer optimal: So betreffen die US 2003/0229936 A1 und die zu derselben Patentfamilie gehörende CA 2 390 629 A1 eine sehr dünne, in gewisser Weise dehnbare Schutzbekleidung in Form einer auf der Haut zu tragenden Unterwäsche, welche Schutzeigenschaften gegenüber chemischen Dämpfen bzw. Gasen aufweist. Das in dieser Patentfamilie beschriebene Material ist mit einer Dicke von weniger als 1 mm sehr dünn, so daß insbesondere unter extremen Situationen nicht immer eine optimale Schutzfunktion gewährleistet ist, insbesondere da das Material aufgrund der relativ geringen Reißkraft nicht über eine optimale mechanische Stabilität verfügt. Darüber hinaus ist es gemäß dieser Patentfamilie vorgesehen, das Adsorptionsfiltermaterial entweder in die Stoffstruktur einzuarbeiten bzw. den Stoff mit den Adsorbentien zu imprägnieren oder das Adsorptionsfiltermaterial in Form einer Wirk- bzw. Maschenware auf Basis von Carbonfasern einzusetzen. Insbesondere aufgrund der physikalischen Eigenschaften der Carbonfasern ergibt sich bei dem Material zwangsläufig eine nur geringe Dehnbarkeit - einhergehend mit einem verschlechterten Tragekomfort

Die DE202005007308U betrifft eine Socke zum Schutz eines Fußes gegen chemische Kampfstoffe, wobei die Socke aus einem Verbundwerkstoff mit zwei dehnbaren textilen Lagen und einer dazwischen eingelagerten Adsorptionsschicht besteht

Vor diesem Hintergrund besteht nunmehr die Aufgabe der vorliegenden Erfindung, ein Adsorptionsfilter- bzw. Schutzmaterial bereitzustellen, welches die zuvor geschilderten Nachteile des Standes der Technik zumindest teilweise vermeidet bzw. diese zumindest verringert, wobei sich das Adsorptionsfiltermaterial insbesondere für die Herstellung von Schutzbekleidung, insbesondere ABC-Schutzbekleidung, vorzugsweise zum Tragen auf der Haut, eignen soll.

Eine weitere Aufgabe der vorliegenden Erfindung besteht darin, ein Adsorptionsfiltermaterial, zur Verwendung für ABC-Schutzbekleidung, zum Tragen auf der Haut, bereitzustellen, welches bei gleichzeitig guter Schutzfunktion gegenüber chemischen oder biologischen Gift- bzw. Kampfstoffen über eine hohe Dehnbarkeit bzw. Elastizität verfügt und sich somit zur Herstellung von Bekleidungsstücken eignet, bei denen eine optimale Anpassung an die Körperform und damit ein hoher Tragekomfort gewährleistet ist.

Eine weitere Aufgabe der vorliegenden Erfindung besteht in der Bereitstellung eines Adsorptionsfiltermaterials, zur Verwendung in ABC-Schutzbekleidung zum Tragen auf der Haut, welches eine hohe physikalische und chemische Widerstandsfähigkeit aufweist und welches zudem über eine hohe Luftdurchlässigkeit verfügt.

Die zuvor geschilderte Aufgabenstellung wird vorschlagsgemäß durch ein Adsorptionsfiltermaterial gemäß Anspruch 1 gelöst. Weitere, vorteilhafte Weiterbildungen und Ausgestaltungen sind Gegenstand der Unteransprüche. Weiterhin wird die zuvor geschilderte Aufgabenstellung durch ein ABC-Schutzbekl eidungsstück gemäß Anspruch 13 gelöst. Schließlich wird die der vorliegenden Erfindung zugrundeliegende Aufgabenstellung durch die Verwendung eines Adsorptionsfiltermaterials gemäß Anspruch 14 gelöst.

Gegenstand der vorliegenden Erfindung ist somit - gemäß einem **ersten** Aspekt der vorliegenden Erfindung - ein Adsorptionsmaterial für ABC-Schutzbekleidung zum Tragen auf der Haut, als Undergarment (Unterwäsche) gemäß Anspruch 1.

Eine grundlegende Idee der vorliegenden Erfindung besteht somit darin, daß erfindungsgemäße Adsorptionsfiltermaterial derart auszubilden, daß das erste textile Flächenmaterial und das zweite textile Flächenmaterial eine reversible Dehnbarkeit bzw. Elastizität aufweisen, und zwar jeweils in mindestens eine Richtung, vorzugsweise in beide Richtungen, insbesondere wie nachfolgend definiert, und daß das erste textile Flächenmaterial und das zweite textile Flächenmaterial zumindest im wesentlichen gleiche Elastizitätseigenschaften aufweisen, da auf diese Weise im besonderen gewährleistet wird, daß das erfindungsgemäße Adsorptionsfiltermaterial über hervorragende Elastizitäts-bzw. Dehneigenschaften verfügt, was den Tragekomfort erheblich verbessert.

Aufgrund der hohen Elastizität des erfindungsgemäßen Adsorptionsfiltermaterials können sich aus bzw. mit dem erfindungsgemäßen Adsorptionsfiltermaterial hergestellte Schutzbekleidungen besonders gut an den Körper bzw. an die Körperform anpassen, so daß derartige Schutzbekleidungen besonders gut bzw. eng an der Haut anliegen. Hieraus resultiert ein besonders hoher Tragekomfort. Denn aufgrund des engen bzw. direkten Anliegens der mit dem erfindungsgemäßen Adsorptionsfiltermaterial hergestellten Schutzbekleidung ist die Tragephysiologie deutlich verbessert, zumal eine Faltenbildung bzw. ein Scheuern der Schutzbekleidung in effektiver Weise unterbunden wird. Zudem kann die mit dem erfindungsgemäßen Adsorptionsfiltermaterial hergestellte Schutzbekleidung gewissermaßen im Sinne einer "zweiten Haut" getragen werden, so daß die Schutzbekleidung das Tragen von Oberbekleidung nicht wesentlich beeinflußt.

Aufgrund der spezifischen Verwendung von diskreten Sorbenspartikeln resultiert zudem eine hohe Schutzfunktion gegenüber chemischen bzw. biologischen Gift- und Schadstoffen auch bei hoher mechanischer Belastung, da derartige Partikel auch bei hoher (Dehn-)Beanspruchung auf dem Trägermaterial bzw. zwischen den Trägerlagen verbleiben und nicht abgelöst werden.

Die hohe Elastizität des erfindungsgemäßen Adsorptionsfiltermaterials führt zudem dazu, daß die Ausbildung von Zwischenräumen zwischen der Schutzbekleidung einerseits und der Körperoberfläche bzw. der Haut andererseits minimiert ist. Aufgrund des dichten bzw. engen An- bzw. Aufliegens der aus dem erfindungsgemäßen Adsorptionsfiltermaterial hergestellten Schutzbekleidung auf der Haut wird somit sozusagen ein "Blasebalgeffekt" verhindert bzw. minimiert, so daß es insbesondere bei körperlicher Aktivität nicht zu einem übermäßigen Luftaustausch zwischen Schutzbekleidung und Träger kommt und so ein etwaiges zusätzliches Einströmen von toxischen Substanzen verhindert wird. Aufgrund der hohen Dehnbarkeit liegen die aus dem erfindungsgemäßen Adsorptionsfiltermaterial hergestellten Schutzanzüge auch an Gelenken unter starker körperlicher Bewegung eng und bequem am Körper an.

Was den Begriff "Undergarment" anbelangt, welcher synonym auch als Unterwäsche bzw. Unterbekleidung bezeichnet wird, so sind diesbezüglich alle Arten von Unterwäschen zu verstehen, welche in bevorzugter Weise direkt auf der Haut getragen werden. Dabei kann die Unterwäsche bzw. die Unterbekleidung in Form einer Schutzbekleidung, insbesondere einer ABC-Schutzbekleidung vorliegen. Diesbezüglich kann das erfindungsgemäße Adsorptionsfiltermaterial beispielsweise und in nichtbeschränkender Weise zu Ganzkörperschutzbekleidung, beispielsweise in Form eines Overalls, verarbeitet werden. Gleichermaßen kann das erfindungsgemäße Adsorptionsfiltermaterial aber auch zu (Unter-)Hemden, (Unter-)Hosen, Socken, (Unter-)Handschuhen, Mützen, Kapuzen oder dergleichen verarbeitet werden.

Was die elastische Ausbildung des textilen Flächenmaterials und damit des Adsorptionsfiltermaterials insgesamt anbelangt, so ist hierunter eine insbesondere reversible Dehnbarkeit zu verstehen. Mit anderen Worten erfährt das erfindungsgemäße Adsorptionsfiltermaterial bzw. das erste textile Flächenmaterial und das zweite textile Flächenmaterial unter Krafteinwirkung, beispielsweise unter Einwirkung einer Zugkraft, eine definierte Längen- bzw. Flächenänderung, wobei nach Wegfall der Krafteinwirkung aufgrund der materialimmanenten Rückstellkraft die Ausgangslänge bzw. Ausgangsfläche vor Krafteinwirkung zumindest im wesentlichen wieder erreicht wird. Diesbezüglich ist die Formulierung "in mindestens eine Richtung" in bezug auf die elastische Ausbildung derart zu verstehen, daß die textilen Flächenmaterialien in Längsund/oder Querrichtung elastisch ausgebildet sind. Im Rahmen einer speziellen Ausführungsform, wonach das erste textile Flächenmaterial und/oder das zweite textile Flächenmaterial in Form eines Gewebes ausgebildet sind, bezieht sich die Elastizität somit auf die Kett- und/oder Schußrichtung des Flächenmaterials. Sofern das Material mindestens in eine Richtung dehnbar ist, wird synonym auch von einem monoelastischen Flächenmaterial gesprochen. Bei Vorliegen einer Elastizität in bezug auf Längs- und Querrichtung wird synonym auch von einem bielastischen Flächenmaterial gesprochen. In erfindungsgemäß bevorzugter Weise sind das erste textile Flächenmaterial und das zweite textile Flächenmaterial jeweils in beide Richtungen, also in Längs- und Querrichtung, elastisch ausgebildet, wobei die Elastizität sowohl des ersten textilen Flächenmaterials als auch des zweiten textilen Flächenmaterials vorteilhafterweise jeweils in beide Richtungen zumindest im wesentlichen gleich sein sollte und wobei die diesbezügliche relative Abweichung höchstens 50 % (relativ), vorzugsweise höchstens 30 % (relativ), besonders bevorzugt vorzugsweise höchstens 10 % (relativ), bezogen auf die Elastizität eines der beiden textilen Flächenmaterialien, betragen sollte. Beträgt beispielsweise die Elastizität des ersten textilen Flächenmaterials in eine erste Richtung (z. B. Längs- bzw. Kettrichtung) 30 %, bezogen auf das Ausgangsmaß, so sollte die Elastizität desselben, d. h. des ersten textilen Flächenmaterials in die andere, zweite Richtung (z. B. Quer- bzw. Schußrichtung) also absolut gesehen (30 ± 15) %, vorzugsweise (30 ± 9) %, besonders bevorzugt (30 ± 3) %, betragen.

Von besonderem Vorteil ist es, wenn das erste textile Flächenmaterial und das zweite textile Flächenmaterial zumindest im wesentlichen gleiche Elastizitätseigenschaften aufweisen bzw. die Elastizitätseigenschaften bzw. das Dehnvermögen des ersten textilen Flächenmaterials und des zweiten textilen Flächenmaterials zumindest im wesentlichen identisch sind bzw. ist. Vorteilhafterweise sollte die Elastizität bzw. das Dehnvermögen des ersten textilen Flächenmaterials einerseits und des zweiten textilen Flächenmaterials andererseits (d. h. im Vergleich zueinander) höchstens 30 % (relativ), vorzugsweise höchstens 20 % (relativ), ganz besonders bevorzugt höchstens 5 % (relativ), bezogen auf die Elastizitätswerte und insbesondere bezogen auf eine Richtung, vorzugsweise auf beide Richtungen (d. h. Quer- und Längsrichtung bzw. im Fall von Geweben etc. Kett- und Schußrichtung), voneinander abweichen.

Beträgt beispielsweise die Elastizität des ersten textilen Flächenmaterials in eine Richtung (z. B. Längs- bzw. Kettrichtung) 40 %, bezogen auf das Ausgangsmaß, so sollte die Elastizität des zweiten textilen Flächenmaterials in derselben Richtung also höchstens um 30 % relativ abweichen, d. h. also absolut gesehen (40 ± 12) % betragen, vorzugsweise um 20 % relativ abweichen, d. h. vorzugsweise also absolut gesehen (40 ± 8) % betragen, und ganz besonders bevorzugt um 10 % relativ abweichen, d. h. also ganz besonders bevorzugt also absolut gesehen (40 ± 4) % betragen.. Die vorgenannten Abweichungsprozente sind also als Relativprozentangaben in bezug auf die Elastizität zu verstehen, welche somit die relative Abweichung in der Elastizität bzw. in der relativen Dehnbarkeit wiedergeben.

Was das erste textile Flächenmaterial anbelangt, so kann es sich hierbei im Rahmen der vorliegenden Erfindung um dasjenige Flächenmaterial handeln, welches im Tragezustand des erfindungsgemäßen Adsorptionsfiltermaterials bzw. der daraus hergestellten Schutzmaterialien im direkten Kontakt mit der Haut des Trägers steht. Das erste textile Flächenmaterial kann somit gewissermaßen die Innenschicht des Adsorptionsfiltermaterials darstellen, während das zweite textile Flächenmaterial im Tragezustand auf der von der Haut des Trägers abgewandten Seite liegt und somit gewissermaßen die Außenschicht darstellt.

Das erste textile Flächenmaterial und das zweite textile Flächenmaterial sind luftdurchlässig ausgebildet. Auf diese Weise kann der Tragekomfort des erfindungsgemäßen Adsorptionsfiltermaterials weiter verbessert werden, da beispielsweise Körperschweiß und/oder Wasserdampf in effektiver Weise vom Körper des Trägers abtransportiert werden kann.

Weiterhin ist es besonders vorteilhaft, wenn das erste textile Flächenmaterial und/oder das zweite textile Flächenmaterial als Gewebe, Gewirke, Gestricke, Gelege oder Textilverbundstoffe, insbesondere Vliese, ausgebildet sind. Gemäß einer erfindungsgemäß bevorzugten Ausführungsform sind das erste textile Flächenmaterial und/oder das zweite textile Flächenmaterial als Strickware oder Wirkware ausgebildet. Diesbezüglich ist es im Rahmen der vorliegenden Erfindung möglich, daß das erste textile Flächenmaterial dieselbe Struktur aufweist wie das zweite textile Flächenmaterial. Gleichermaßen ist es jedoch möglich, daß das erste textile Flächenmaterial eine von dem zweiten textilen Flächenmaterial unterschiedliche Struktur aufweist. Beispielsweise kann es - in nichtbeschränkender Weise - vorgesehen sein, daß das erste textile Flächenmaterial als Gewirk ausgebildet ist, während das zweite textile Flächenmaterial ein Gewebe ist.

Das erste textile Flächenmaterial und/oder das zweite textile Flächenmaterial umfassen eine Mischung aus mindestens zwei unterschiedlichen Faserarten umfassen, wobei das erste textile Flächenmaterial und/oder das zweite textile Flächenmaterials mindestens eine elastische und/oder reversibel dehnbare Faserart. Die Verwendung mindestens einer elastischen bzw. reversiblen dehnbaren Faserart führt dazu, daß das Elastizitätsverhalten des ersten textilen Flächenmaterials bzw. des zweiten textilen Flächenfiltermaterials und damit des Adsorptionsfiltermaterials insgesamt signifikant verbessert wird. Was die Einarbeitung der elastischen bzw. reversibel dehnbaren Faserart bzw. die Mischung mit mindestens einer hiervon verschiedenen Faserart und die Verarbeitung zu entsprechenden textilen Strukturen, wie Geweben, Gewirken und dergleichen, anbelangt, so sind diese dem Fachmann hinlänglich bekannt, so daß es diesbezüglich keiner weiteren Ausführung bedarf.

Was die elastische bzw. reversibel dehnbare Faserart anbelangt, so sollte diese physikalisch und/oder chemisch beständig sein, insbesondere wobei die elastische bzw. reversibel dehnbare Faserart temperaturbeständig und/oder chemikalienbeständig und/oder widerstandsfähig gegenüber Ultraviolett(UV)-Strahlung und/oder Xenonlicht sein sollte. Durch die Verwendung derartiger Faserarten kann das erfindungsgemäße Adsorptionsfiltermaterial als solches insgesamt über verbesserte Eigenschaften in bezug auf eine Chemikalienbeständigkeit und gegenüber der Einwirkung physikalischer Einflüsse aufweisen, so daß ein sehr dauerhaftes und widerstandsfähiges Adsorptionsfiltermaterial nach der Erfindung bereitgestellt werden kann.

Was die elastische bzw. reversibel dehnbare Faserart anbelangt, so ist diese eine von Polyurethanfasern verschiedene Faserart. Denn Polyurethanfasern eignen sich - wie die Anmelderin herausgefunden hat - insbesondere aufgrund ihrer schlechten chemischen Beständigkeit und ihrer nicht immer optimalen Elastizitätseigenschaften nicht zur Verwendung im Rahmen des erfindungsgemäßen Adsorptionsfiltermaterials. Vielmehr ist die elastische und/oder reversibel dehnbare Faserart eine elastische, insbesondere (quer-)vernetzte Polyolefinfaser, vorzugsweise eine elastische, insbesondere (quer-)-vernetzte Polyethylen- oder Polypropylenfaser, oder eine elastische Polyamidfaser oder eine elastische Polyesterfaser.

Diesbezüglich ist es demnach erfindungsgemäß bevorzugt, daß die elastische bzw. reversibel dehnbare Faserart polyolefinbasiert ist. Weiterhin ist es bevorzugt, daß die elastische bzw. reversibel dehnbare Faserart eine Faser auf Basis eines Ethylen/Olefin-Copolymers ist.

Gemäß einer erfindungsgemäß besonders bevorzugten Ausführungsform handelt es sich bei den eingesetzten elastischen bzw. reversibel dehnbaren Fasern um Fasern vom Typ DOW XLA^{®} (nachfolgend DOW XLA^{®}-Fasern genannt), welche kommerziell erhältlich sind von The Dow Chemical Company (DOW), Midland, Michigan, USA. Bei DOW XLA^{®}-Fasern handelt es sich um ein Ethylen/Olefin-Copolymer mit niedriger Kristallinität und flexiblen Polymerketten, welche durch die vorgenannten Kristallite und kovalenten Bindungen zur Ausbildung eines insgesamt elastischen molekularen Netzwerkes verbunden sind. Die vorgenannten elastischen bzw. reversibel dehnbaren Faserarten, insbesondere die DOW XLA^{®}-Fasern, können beispielsweise im Rahmen von Schmelzspinnverfahren, insbesondere mit nachfolgender Vernetzung, hergestellt werden, wobei mono- oder mehrfilamentige Fasern hergestellt werden können. Die vorgenannten Fasern eignen sich insbesondere zur Mischung mit anderen Faserarten, wie sie nachfolgend noch ausführlich beschrieben werden.

Die Verwendung von DOW XLA^{®}-Fasern ist zudem vorteilhaft, da es sich hierbei um Fasern handelt, welche eine extrem hohe Resistenz gegenüber Chemikalien, wie alkalischen Substanzen, Säuren bzw. oxidierenden Zusammensetzungen, wie Natriumhypochlorit, aufweisen. Zudem sind derartige Fasern in einer großen Anzahl von Lösemitteln nahezu unlöslich.

Das erste textile Flächenmaterial und/oder das zweite textile Flächenmaterial kann die elastische bzw. reversibel dehnbare Faserart in einer Menge von 5 bis 30 Gew.-%, insbesondere 7 bis 25 Gew.-%, vorzugsweise 8 bis 20 Gew.-%, bezogen auf das jeweilige textile Flächenmaterial, aufweisen. Hierdurch wird es insbesondere ermöglicht, daß die textilen Flächenmaterialien und somit das Adsorptionsfiltermaterial insgesamt sowohl die positiven Eigenschaften der elastischen bzw. reversiblen Faserart als auch die Eigenschaften der hiervon verschiedenen Faserart, insbesondere wie nachfolgend beschrieben, aufweisen. So kann das erfindungsgemäße Adsorptionsfiltermaterial beispielsweise und in nichtbeschränkender Weise elastische Eigenschaften aufgrund der Gegenwart der elastischen bzw. reversibel dehnbaren Faserart bei gleichzeitig guter Haptik bzw. Hautfreundlichkeit, wie sie beispielsweise durch die Gegenwart von Baumwollfasern gewährleistet wird, aufweisen.

Somit kann - in erfindungsgemäß bevorzugter Weise - das erste textile Flächenmaterial und/oder das zweite textile Flächenmaterial neben der zuvor beschriebenen elastischen bzw. reversibel dehnbaren Faserart mindestens eine weitere Faserart, insbesondere Textilfasern, aufweisen.

Diesbezüglich kann es vorgesehen sein, daß die weitere Faserart, die in Mischung mit der zuvor beschriebenen elastischen bzw. reversibel dehnbaren Faserart vorliegt, natürliche Fasern, vorzugsweise Baumwollfasern (CO), und/oder chemische Fasern, vorzugsweise synthetische Fasern, insbesondere ausgewählt aus der Gruppe von Polyestern (PES); Polyolefinen, insbesondere Polyethylen (PE) und/oder Polypropylen (PP), Polyvinylchlorid (CLF); Polyvinylidenchlorid (CLF); Acetat (CA), Triacetat (CTA), Polyacryl (PAN), Polyamid (PA), insbesondere aromatischen, vorzugsweise flammfesten Polyamiden (z. B. NOMEX^{®}); Polyvinylalkohol (PVAL); Polyurethanen; Polyvinylestern; (Meth-)acrylaten; sowie deren Mischungen, vorzugsweise Polyamid (PA), umfassen. Die vorgenannten Kurzzeichen für die Textilfasern entstammen der DIN 60001-4 (August 1991).

Für weitergehende Einzelheiten zu dem Begriff der Textilfasern - synonym auch als textile Faserstoffe bezeichnet - kann beispielsweise verwiesen werden auf Römpp Chemielexikon, Georg Thieme Verlag Stuttgart/New York, Band 6, 1999, Seiten 4477 bis 4479, Stichwort: "Textilfasern", deren gesamter Offenbarungsgehalt einschließlich der dort genannten Literaturstellen hiermit durch Bezugnahme eingeschlossen ist. Insbesondere wird im Rahmen der vorliegenden Erfindung der Begriff der Textilfasern als eine Sammelbezeichnung für sämtliche Fasern, die sich textil verarbeiten lassen, verstanden; gemeinsam ist den Textilfasern eine im Vergleich zu ihrem Querschnitt große Länge sowie ausreichende Festigkeit und Biegsamkeit, wobei sich die Textilfasern nach Herkunft und stoffliche Beschaffenheit in verschiedene Gruppen einteilen lassen.

Erfindungsgemäß kann es vorgesehen sein, daß das erste textile Flächenmaterial und das zweite textile Flächenmaterial jeweils unterschiedliche weitere Faserarten, insbesondere Textilfasern, bezogen auf Art und/oder Menge der weiteren Faserarten aufweisen. Zudem kann es vorgesehen sein, daß das erste Flächenmaterial und das zweite Flächenmaterial identische elastische bzw. reversibel dehnbare Faserarten, bezogen auf Art bzw. Menge der elastischen bzw. reversibel dehnbaren Faserart, aufweisen. Mit anderen Worten kann es erfindungsgemäß beispielsweise vorgesehen sein, daß in bezug auf das erste textile Flächenmaterial und das zweite textile Flächenmaterial identische elastische Faserarten eingesetzt werden, während die Textilfasern unterschiedlich sind - beispielsweise und in nichtbeschränkender Weise eine natürliche Faser, insbesondere eine Baumwollfaser, in bezug auf das erste textile Flächenmaterial und eine synthetische Faser, insbesondere Polyamid (PA), in bezug auf das zweite textile Flächenmaterial. Dabei können die entsprechenden Mengen gleichermaßen voneinander differieren oder aber identisch sein. Auf diese Weise ist es erfindungsgemäß möglich, die jeweiligen textilen Flächenmaterialien individuell auszugestalten. Diesbezüglich kann beispielsweise das erste textile Flächenmaterial, welches sich im Tragezustand im direkten Kontakt mit der Haut des Trägers befindet, besonders hautfreundlich bzw. mit angenehmem Tagegefühl ausgerüstet werden, während beispielsweise das zweite textile Flächenmaterial, welches sich im Tragezustand auf der dem Körper bzw. der Haut abgewandten Seite befindet, mit einer hohen Chemikalienresistenz ausgestattet wird. Im Rahmen der vorliegenden Erfindung ist es aber gleichermaßen möglich, daß das erste textile Flächenmaterial und das zweite textile Flächenmaterial identische Faserarten aufweisen.

Was das Adsorptionsflächenfiltermaterial nach der Erfindung weiterhin anbelangt, so kann der Klebstoff auf dem ersten textilen Flächenmaterial und/oder dem zweiten textilen Flächenmaterial in einer Auftragsmenge von 2 bis 40 g/m² aufgetragen sein. Weiterhin kann der Klebstoff das erste textile Flächenmaterial und/oder das zweite textile Flächenmaterial zu höchstens 70 %, insbesondere höchstens 60 %, vorzugsweise höchstens 50 %, bevorzugt höchstens 40 %, besonders bevorzugt höchstens 30 %, bedecken. Die diesbezüglich verwendeten Klebstofftypen, welche beispielsweise reaktive, insbesondere isocyanatreaktive Klebstoffe oder aber auch Schmelzklebstoffe sein können, sind dem Fachmann hinlänglich bekannt, so daß es diesbezüglich keiner weiteren Ausführung bedarf. Aufgrund der diskontinuierlichen bzw. punktförmigen Auftragung des Klebstoffs wird eine hohe Atmungsaktivität bzw. Luftdurchlässigkeit des erfindungsgemäßen Adsorptionsfiltermaterials bei gleichzeitig hoher Stabilität des resultierenden Schichtverbundes gewährleistet.

Denn im Rahmen der vorliegenden Erfindung kann es vorgesehen sein, daß der Klebstoff aufgetragen werden kann derart, daß die Sorbenspartikel gewissermaßen beidseitig mit den textilen Flächenmaterialien verklebt sind, wobei der Klebstoffauftrag bzw. die Verklebung derart erfolgen sollte, daß ein bestimmter Oberflächenabschnitt der Sorbenspartikel nicht vom Klebstoff bedeckt ist, so daß ein guter Kontakt mit der Umgebungsluft zur effektiven Adsorption toxischer Substanzen vorliegt. Diesbezüglich sollte mindestens 25 %, insbesondere mindestens 30 %, vorzugsweise mindestens 40 %, besonders bevorzugt mindestens 50 %, der Oberfläche der Sorbenspartikel für die zu adsorbierenden toxischen Substanzen frei zugänglich sein (d. h. nicht mit Klebstoff bedeckt sein). Hierdurch wird die Adsorptionskapazität der Sorbenspartikel möglichst weitgehend ausgenutzt.

Wie zuvor sollte die Luftdurchlässigkeit des Adsorptionsfiltermaterials 40 bis 250 1•m⁻²•s⁻¹, insbesondere mindestens 50 1•m⁻²•s⁻¹, vorzugsweise mindestens 80 1•m⁻²•s⁻¹, besonders bevorzugt mindestens 100 1•m⁻²•s⁻¹, und/oder bis zu 1.000 1•m⁻²•s⁻¹ bei einem Strömungswiderstand von 127 Pa betragen.

Zur Gewährleistung eines guten Tragekomforts weist das erfindungsgemäße Adsorptionsfiltermaterial und vorzugsweise das gesamte Bekleidungsstück bei 25 °C eine Wasserdampfdurchlässigkeit von mindestens 25 1 / m² pro 24 h, insbesondere mindestens 30 1 / m² pro 24 h, vorzugsweise mindestens 50 1 / m² pro 24 h oder mehr, auf. Die Wasserdampfdurchlässigkeit kann insbesondere nach der sogenannten "Methode des umgekehrten Bechers" bzw. "*Inverted Cup Method*" nach ASTM E 96 und bei 25 °C gemessen werden. Zu weiteren Einzelheiten zur Messung der Wasserdampfdurchlässigkeit (*Water Vapour Transmission,* WVT) kann beispielsweise verwiesen werden auf McCoullough et al. "A comparison of standard methods for measuring water vapour permeability of fabrics" in: Meas. Sci. Technol. [Measurements Science and Technology] 14, Seiten 1402 bis 1408 (August 2003).

Weiterhin sollte - zur Gewährleistung eines hohen Tragekomforts - das erfindungsgemäße Adsorptionsfiltermaterial einen Wasserdampfdurchgangswiderstand Rₑₜ unter stationären Bedingungen, gemessen nach DIN EN 31 092: 1993 (Februar 1994) und/oder internationaler Norm ISO 11 092, bei 35 °C von höchstens 20 (m² · Pascal) / Watt, insbesondere höchstens 10 (m² · Pascal) / Watt, vorzugsweise höchstens 5 (m² · Pascal) / Watt, aufweisen.

Was die Biegefestigkeit des erfindungsgemäßen Adsorptionsfiltermaterials anbelangt, so sollte diese höchstens 800 mg•cm, insbesondere höchstens 600 mg•cm, vorzugsweise höchstens 400 mg•cm, in mindestens eine Richtung, vorzugsweise in Längs- und Querrichtung, betragen. Aufgrund der relativ geringen Biegefestigkeit ist das Material hochgradig flexibel und paßt sich Formveränderungen, beispielsweise bei der Bewegung des Trägers hervorragend an, wodurch der Tragekomfort insgesamt noch weiter verbessert wird. Die Biegefestigkeit wird im Rahmen der vorliegenden Erfindung gemäß der Norm ASTM D-1388 bestimmt.

Was die Eigenschaften des erfindungsgemäßen Adsorptionsfiltermaterials weiterhin anbelangt, so kann dies einen Berstdruck, bestimmt nach der Norm ISO 13938-2, von mindestens 100 kPa, insbesondere mindestens 130 kPa, vorzugsweise mindestens 150 kPa, bevorzugt mindestens 170 kPa, aufweisen, so daß das Material insgesamt über eine hohe mechanische Stabilität verfügt und somit auch bei starker physikalischer Beanspruchung, beispielsweise im Rahmen eines Kampfeinsatzes, nicht zerstört wird.

Zudem sollte das erfindungsgemäße Adsorptionsfiltermaterial eine elastische Dehnung in mindestens eine Richtung, vorzugsweise in Längs- oder Querrichtung, von mindestens 10 %, insbesondere mindestens 15 %, vorzugsweise mindestens 20 %, bevorzugt mindestens 25 %, besonders bevorzugt mindestens 30 %, ganz besonders bevorzugt mindestens 35 %, bei 20 N und bezogen auf das Adsorptionsfiltermaterial (d. h. also bezogen auf dessen Ausgangsmaße), aufweisen. Die elastische Dehnung kann im Rahmen der vorliegenden Erfindung auf Basis der Norm DIN 53835-14 bestimmt werden. Wie zuvor angeführt, führt die hohe Elastizität bzw. elastische Dehnung bzw. reversible Dehnung, dazu, daß das erfindungsgemäße Adsorptionsfiltermaterial sich besonders gut der Körperform des Trägers anpaßt und somit eng an der Haut anliegt.

Um eine ausreichende Stabilität zu gewährleisten, sollte das erfindungsgemäße Adsorptionsfiltermaterial über eine ausreichende Dicke verfügen. So hat die Anmelderin gefunden, daß sich besonders gute Stabilitätswerte ergeben, wenn das erfindungsgemäße Adsorptionsfiltermaterial eine Gesamtdicke von mehr als 1,0 mm, insbesondere mindestens 1,05 mm, bevorzugt mindestens 1,1 mm, aufweist. Das erfindungsgemäße Adsorptionsfiltermaterial kann in diesem Zusammenhang eine Gesamtdicke von bis zu 1,5 mm aufweisen.

Das erste textile Flächenmaterial und/oder das zweite textile Flächenmaterial, vorzugsweise das erste textile Flächenmaterial, welches im Tragezustand auf der Haut des Trägers liegt, kann gemäß einer erfindungsgemäß bevorzugten Ausführungsform mit einer bakteriostatischen und/oder bakterioziden Zusammensetzung, insbesondere mit einer silberhaltigen Verbindung und/oder Silber, beschichtet bzw. imprägniert sein. Diesbezüglich kann die Menge der Zusammensetzung 0,0001 bis 10 Gew.-%, insbesondere 0,001 bis 5 Gew.-%, vorzugsweise 0,01 bis 1 Gew.-%, bezogen auf das jeweilige textile Flächenmaterial, betragen. Gleichermaßen kann aber auch das zweite textile Flächenmaterial mit einer bakteriostatischen und/oder bakterioziden Zusammensetzung beschichtet sein. Diesbezüglich kann insbesondere ein zusätzlicher Schutz gegenüber biologischen Kampfstoffen, wie beispielsweise schädlichen Mikroorganismen, bereitgestellt werden. Zudem reduziert die bakteriostatische bzw. bakteriozide Beschichtung bzw. Imprägnierung das Bakterienwachstum an sich, so daß das erfindungsgemäße Adsorptionsfiltermaterial länger getragen werden kann, da es sozusagen "länger frisch" bleibt.

Darüber hinaus kann es erfindungsgemäß vorgesehen sein, daß das erste textile Flächenmaterial und/oder zweite textile Flächenmaterial, vorzugsweise das erste textile Flächenmaterial, welches im Tragezustand auf der der Haut des Trägers zugewandten Seite liegt, hydrophiliert und/oder wasseraufnehmend sind; dies hat den Vorteil, daß vom Körper gebildeter Schweiß aufgenommen und abtransportiert werden kann. Diesbezüglich kann eine spezielle Imprägnierung eingesetzt werden. Gleichermaßen können das erste textile Flächenmaterial und/oder das zweite textile Flächenmaterial, vorzugsweise das zweite textile Flächenmaterial, mit einem Flammschutz ausgerüstet sein. Gleichermaßen kann es möglich sein, daß das erste textile Flächenmaterial und/oder das zweite textile Flächenmaterial, vorzugsweise das zweite textile Flächenmaterial, antistatisch ausgerüstet sind. Gemäß einer weiteren erfindungsgemäßen Ausführungsform können das erste textile Flächenmaterial und/oder das zweite textile Flächenmaterial, vorzugsweise das zweite textile Flächenmaterial, mit Infrarotreflexionseigenschaften ausgerüstet sein. Aufgrund der spezifischen Ausrüstung der Schichten kann eine individuelle Anpassung des erfindungsgemäßen Adsorptionsfiltermaterials in bezug auf die jeweiligen Einsatzbedingungen gewährleistet werden. Das erfindungsgemäße Adsorptionsfiltermaterial kann in bezug auf die jeweilige Einsatzbedingung somit sozusagen maßgeschneidert werden.

Was die erfindungsgemäß eingesetzten Sorbenspartikel anbelangt, so umfassen diese insbesondere diskrete Aktivkohleteilchen, vorzugsweise in Kornform ("Kornkohle") oder Kugelform ("Kugelkohle"), oder bestehen hieraus.

Diesbezüglich kann der mittlere Durchmesser der Sorbenspartikel, insbesondere der Aktivkohleteilchen, 0,01 bis 2 mm, vorzugsweise 0,05 bis 1 mm, bevorzugt 0,1 bis 0,5 mm, betragen.

Vorteilhafterweise werden die Sorbenspartikel, insbesondere die Aktivkohleteilchen, in einer Menge von 40 bis 250 g/m², insbesondere 50 bis 180 g/m², vorzugsweise 55 bis 130 g/m², eingesetzt werden.

Erfindungsgemäß bevorzugt eingesetzte Aktivkohleteilchen sind im allgemeinen abriebfest ausgebildet. Vorteilhafterweise beträgt der Berstdruck für ein Aktivkohleteilchen 5 N, insbesondere mindestens 10 N. Vorzugsweise liegt der Berstdruck für ein einzelnen Aktivkohlekörnchen, insbesondere Aktivkohlekügelchen im Bereich von 5 bis 20 N. Auf diese Weise wird ein erfindungsgemäßes Adsorptionsfiltermaterial erhalten, in dem die Aktivkohle in mechanisch resistenter Form vorliegt. Derartig abriebfeste Aktivkohle kann insbesondere durch Carbonisierung und nachfolgender Aktivierung geeigneter Polymerausgangskügelchen, vorzugsweise auf Basis von divinylbenzolvernetzten Styrolen, erhalten werden. Folglich neigen die eingesetzten Aktivkohlekörner auch unter mechanischer Belastung nicht zu einem Zerplatzen und nicht zur Staubbildung (kein Aktivkohlestaub). Insbesondere sind die eingesetzten Aktivkohlekörner staubfrei, insbesondere frei von pulverförmiger Aktivkohle ausgebildet.

Folglich neigen die eingesetzten Aktivkohlekörner auch unter mechanischer Belastung nicht zu einem Zerplatzen und nicht zur Staubbildung (kein Aktivkohlestaub). Insbesondere sind die eingesetzten Aktivkohlekörner staubfrei bzw. frei von pulverförmiger Aktivkohle ausgebildet.

Um eine hohe Leistungsfähigkeit des erfindungsgemäßen Adsorptionsfiltermaterials zu gewährleisten, ist es vorteilhaft, wenn die eingesetzte Aktivkohle eine spezifische Oberfläche (BET) von mindestens 500 m²/g, insbesondere mindestens 750 m²/g, vorzugsweise mindestens 1.000 m²/g, besonders bevorzugt mindestens 1.200 m²/g, aufweist. Im allgemeinen weist die erfindungsgemäß eingesetzte Aktivkohle eine spezifische Oberfläche (BET) im Bereich von 500 bis 2.500 m²/g, insbesondere 750 bis 2.250 m²/g, vorzugsweise 900 bis 2.000 m²/g, besonders bevorzugt 1.000 bis 1.750 m²/g, auf. Zur BET-Methode kann beispielsweise verwiesen werden auf Römpp Chemielexikon, 10. Auflage, Georg Thieme Verlag Stuttgart/New York, Stichwort: "BET-Methode", sowie auf die dort referierte Literatur, insbesondere Winnacker-Küchler, 3. Auflage, Band 7, Seiten 93 ff., sowie Z. Annal. Chem. 238, Seiten 187 bis 193 (1968).

Um eine hohe Effizienz des erfindungsgemäßen Adsorptionsfiltermaterials zu ermöglichen, ist es bevorzugt, wenn die eingesetzte Aktivkohle eine Aktivkohle mit einem Adsorptionsvolumen V_{ads} von mindestens 250 cm³/g, insbesondere mindestens 300 cm³/g, vorzugsweise mindestens 350 cm³/g, besonders bevorzugt mindestens 400 cm³/g, ist. Im allgemeinen wird eine Aktivkohle mit einem Adsorptionsvolumen V_{ads} von 250 bis 1.000 cm³/g, insbesondere 300 bis 900 cm³/g, vorzugsweise 350 bis 750 cm³/g, eingesetzt.

Erfindungsgemäß bevorzugt ist eine Aktivkohle mit einem Gesamtporenvolumen nach Gurvich von mindestens 0,50 cm³/g, insbesondere mindestens 0,55 cm³/g, vorzugsweise mindestens 0,60 cm³/g, besonders bevorzugt mindestens 0,65 cm³/g, ganz besonders bevorzugt mindestens 0,70 cm³/g. Im allgemeinen wird eine Aktivkohle mit einem Gesamtporenvolumen nach Gurvich von 0,50 bis 0,90 cm³/g, insbesondere 0,55 bis 0,85 cm³/g, vorzugsweise 0,60 bis 0,80 cm³/g, besonders bevorzugt 0,65 bis 0,80 cm³/g, ganz besonders bevorzugt 0,70 bis 0,75 cm³/g, eingesetzt. Zu weiteren Einzelheiten bezüglich der Bestimmung des Gesamtporenvolumens nach Gurvich kann beispielsweise verwiesen werden auf L. Gurvich (1915), J. Phys. Chem. Soc. Russ. 47, 805, sowie auf S. Lowell et al., Characterization of Porous Solids and Powders: Surface Area Pore Size and Density, Kluwer Academic Publishers, Article Technology Series, Seiten 111 ff.

Die Anmelderin hat herausgefunden, daß als Aktivkohle insbesondere eine Aktivkohle mit großem Mikroporenvolumenanteil, bezogen auf das Gesamtporenvolumen der Aktivkohle, geeignet ist. Im Rahmen der vorliegenden Erfindung wird unter dem Begriff des Mikroporenvolumens insbesondere dasjenige Porenvolumen der Aktivkohle verstanden, welches durch Poren mit einem Durchmesser von ≤ 25 Å (2,5 nm), insbesondere ≤ 20 Å (2,0 nm), bereitgestellt wird.

Die Anmelderin hat nämlich überraschenderweise herausgefunden, daß die Reduzierung der Schad- und/oder Geruchsstoffkonzentrationen besonders effizient ist, wenn der Mikroporenvolumenanteil der eingesetzten Aktivkohle besonders hoch ist. Ohne sich auf eine bestimmte Theorie festlegen zu wollen, läßt sich die besonders gute Effizienz mit einer Aktivkohle mit besonders großem Mikroporenvolumenanteil darauf zurückführen, daß die Mikroporen aufgrund ihrer nur geringen Größe sozusagen von allen Seiten bzw. Wandungen mit den zu sorbierenden bzw. adsorbierenden Molekülen in Wechselwirkung treten können. Insbesondere wird eine Aktivkohle mit einem Anteil des Mikroporenvolumens, bezogen auf das Gesamtporenvolumen der Aktivkohle, von mindestens 60 %, insbesondere mindestens 65 %, bevorzugt mindestens 70 %, eingesetzt.

Insbesondere wird in erfindungsgemäß bevorzugter Weise eine Aktivkohle mit einem aus Poren mit Porendurchmessern von ≤ 25 Å, vorzugsweise ≤ 20 Å, gebildeten Mikroporenvolumenanteil von mindestens 60 %, insbesondere mindestens 65 %, bevorzugt mindestens 70 %, bezogen auf das Gesamtporenvolumen, eingesetzt.

Eine erfindungsgemäß bevorzugt eingesetzte Aktivkohle weist ein Mikroporenvolumen, d. h. ein aus Poren mit Porendurchmessern von ≤ 25 Å, vorzugsweise ≤ 20 Å, gebildetes Mikroporenvolumen, nach Carbon Black von mindestens 0,40 cm³/g, insbesondere mindestens 0,45 cm³/g, vorzugsweise mindestens 0,50 cm³/g, auf. Im allgemeinen liegt dieses Mikroporenvolumen nach Carbon Black im Bereich von 0,40 bis 0,80 cm³/g, insbesondere 0,45 bis 0,75 cm³/g, vorzugsweise 0,50 bis 0,60 cm³/g. Zu weiteren Einzelheiten der Bestimmung der Porenoberfläche nach Carbon Black kann beispielsweise verwiesen werden auf R. W. Magee, Evaluation of the External Surface Area of Carbon Black by Nitrogene Adsorption, Presented at the Meeting of the Rubber Division of the American Chem. Soc., Oktober 1994, z. B. referiert in: Quantachrome Instruments, AUTOSORB-1 AS1 WinVersion 1.50, Operating Manual, P/N 05061, Quantachrome Instruments 2004, Florida, USA, Seiten 71 ff.

Aufgrund der hohen Mikroporosität der erfindungsgemäß bevorzugt eingesetzten Aktivkohle weist diese gleichermaßen einen hohen spezifischen Mikroporenoberflächenanteil auf. Der spezifische Mikroporenoberflächenanteil, d. h. der Oberflächenanteil, der auf Poren mit Porendurchmessern von ≤ 25 Å, vorzugsweise ≤ 20 Å, zurückgeht beträgt mindestens 70 %, insbesondere mindestens 75 %, bevorzugt mindestens 80 %, ganz besonders bevorzugt mindestens 85 %, bezogen auf die spezifische Gesamtoberfläche (BET) der Aktivkohle. Insbesondere liegt dieser Mikroporenoberflächenanteil im Bereich von 70 bis 95 %, insbesondere 75 bis 95 %, vorzugsweise 80 bis 90 %.

Die erfindungsgemäß bevorzugt eingesetzte Aktivkohle weist aufgrund ihrer Mikroporosität gleichermaßen eine große Mikroporenoberfläche auf. Insbesondere liegt die Mikroporenoberfläche nach Carbon Black (d. h. die aus Poren mit Porendurchmessern von ≤ 25 Å, vorzugsweise ≤ 20 Å, gebildete Mikroporenoberfläche) bei mindestens 400 m²/g, insbesondere mindestens 800 m²/g, vorzugsweise mindestens 1.000 m²/g, besonders bevorzugt mindestens 1.200 m²/g. Gemäß einer bevorzugten Ausführungsform liegt diese Mikroporenoberfläche im Bereich von 400 bis 1.750 m²/g, insbesondere 800 bis 1.500 m²/g, vorzugsweise 1.000 bis 1.400 m²/g, besonders bevorzugt 1.100 bis 1.300 m²/g.

Erfindungsgemäß bevorzugt wird als Aktivkohle eine mikroporöse Aktivkohle mit einem mittleren Porendurchmesser (Durchschnittsporendurchmesser) von höchstens 35 Å, vorzugsweise höchstens 30 Å, besonders bevorzugt höchstens 25 Å, eingesetzt. Insbesondere liegt dieser mittlere Porendurchmesser im Bereich von 15 bis 35 Å, insbesondere 15 bis 30 Å, vorzugsweise 15 bis 25 Å.

Was die Dichte der erfindungsgemäß bevorzugt eingesetzten Aktivkohle anbelangt, so liegt die Rohdichte der eingesetzten Aktivkohle im allgemeinen im Bereich von 700 bis 975 g/cm³, insbesondere 750 bis 950 g/cm³, vorzugsweise 800 bis 900 g/cm³. Die Schüttdichte der eingesetzten Aktivkohle liegt dagegen im Bereich von 300 bis 900 g/cm³, insbesondere 350 bis 800 g/cm³, vorzugsweise 400 bis 750 g/cm³.

Für eine besonders gute Effizienz ist es von Vorteil, wenn die eingesetzte Aktivkohle eine Gesamtporosität von 40 bis 70 %, insbesondere 45 bis 65 %, vorzugsweise 50 bis 60 %, aufweist.

Erfindungsgemäß bevorzugt wird als Aktivkohle eine Aktivkohle mit einem spezifischen Gesamtporenvolumen im Bereich von 0,1 bis 2,5 cm³/g, insbesondere 0,2 bis 2,0 cm³/g, vorzugsweise 0,3 bis 1,5 cm³/g, besonders bevorzugt 0,4 bis 1,0 cm³/g, eingesetzt. Dabei liegt der Anteil an Poren mit Porendurchmessern von ≤ 36 Å bei mindestens 65 %, insbesondere mindestens 70 %, vorzugsweise mindestens 75 %, und kann Werte bis zu 95 %, insbesondere bis zu 90 %, erreichen.

Eine erfindungsgemäß besonders geeignete Aktivkohle, welche die vorgenannten Eigenschaften und Spezifikationen erfüllt, wird beispielsweise von der Blücher GmbH, Erkrath, Deutschland, oder von der AdsorTech GmbH, Premnitz, Deutschland, vertrieben.

Zur Steigerung der Adsorptionsleistung kann erfindungsgemäß eingesetzte Aktivkohle mit einer Imprägnierung versehen werden. Dies ist dem Fachmann als solches bekannt. Gleichermaßen kann die Aktivohle diesbezüglich mit einem Katalysator, welcher dem Fachmann an sich bekannt ist, imprägniert werden.

Durch die erfindungsgemäße Ausgestaltung des Adsorptionsfiltermaterials nach der vorliegenden Erfindung wird eine ausgezeichnete Barrierewirkung gegenüber chemischen Kampfstoffen erreicht. Die Barrierewirkung des Adsorptionsfiltermaterials gegenüber chemischen Kampfstoffen, insbesondere Bis-[2-chlorethyl]sulfid (synonym auch als Senfgas, Lost oder Gelbkreuz bezeichnet), gemessen nach CRDEC-SP-84010, Methode 2.2, beträgt höchstens 4 µg / cm² pro 24 h, insbesondere höchstens 3,5 µg / cm² pro 24 h, vorzugsweise höchstens 3,0 µg / cm² pro 24 h, besonders bevorzugt höchstens 2,5 µg / cm² pro 24 h.

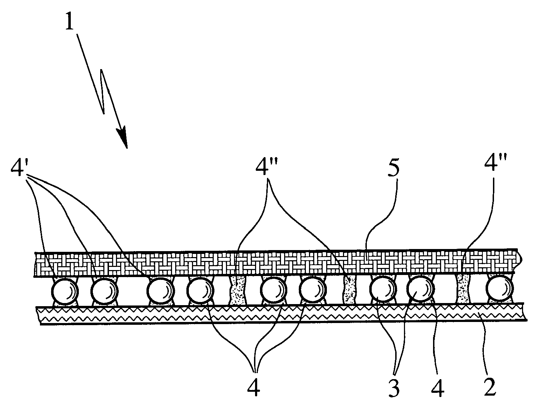

Weitere Vorteile, Eigenschaften und Merkmale der vorliegenden Erfindung ergeben sich aus der folgenden Beschreibung eines in der Zeichnung hergestellten, bevorzugten Ausführungsbeispiels. Es zeigt:
Fig. eine schematische Schnittdarstellung durch den Schichtaufbau eines erfindungsgemäßen Adsorptionsfiltermaterials gemäß einem bevorzugten Ausführungsbeispiel der vorliegenden Erfindung entsprechend einer speziellen Ausführungsform.

Die einzige Figur zeigt eine schematische Schnittdarstellung durch den Schichtaufbau eines erfindungsgemäßen Adsorptionsfiltermaterials 1 entsprechend einer speziellen Ausgestaltung. Das erfindungsgemäße Adsorptionsfiltermaterial, welches für ABC-Schutzbekleidung zum Tragen auf der Haut als Undergarment (Unterwäsche), verwendet wird, weist einen mehrschichtigen Aufbau auf, wobei der mehrschichtige Aufbau ein erstes textiles Flächenmaterial 2, ein zweites textiles Flächenmaterial 5 und eine zwischen dem ersten und dem zweiten textilen Flächenmaterial 2 angeordnete Adsorptionsschicht umfaßt, wobei die Adsorptionsschicht diskrete, insbesondere kornförmige, vorzugsweise kugelförmige chemische und/oder biologische Gift- und Schadstoffe, insbesondere Kampfstoffe, adsorbierende Sorbenspartikel 3, vorzugsweise auf der Basis von Aktivkohle, aufweist. Das erfindungsgemäße Adsorptionsmaterial 1 zeichnet sich dadurch aus, daß das erste textile Flächenmaterial 2 und das zweite textile Flächenmaterial 5 jeweils in mindestens eine Richtung, vorzugsweise in beide Richtungen, elastisch ausgebildet sind.

Die Figur zeigt weiterhin, daß die Sorbenspartikel 3 mittels eines Klebstoffes 4 mit dem ersten textilen Flächenmaterial 2 und/oder dem zweiten textilen Flächenmaterial 5 verklebt sind. Gleichermaßen zeigt die Figur eine erfindungsgemäße Ausführungsform, wonach das zweite textile Flächenmaterial 5 mit dem ersten textilen Flächenmaterial 2 über Klebstoffpunkte bzw. -brücken 4" verbunden ist.

Gegenstand der vorliegenden Erfindung - gemäß einem **zweiten** Aspekt der vorliegenden Erfindung - ist ein erfindungsgemäßes ABC-Schutzbekleidungsstück zum Tragen auf der Haut als Undergarment (Unterwäsche), aufweisend ein Adsorptionsfiltermaterial, insbesondere wie zuvor definiert, und/oder hergestellt unter Verwendung eines Adsorptionsfiltermaterials, insbesondere wie zuvor definiert. Für weitergehende Einzelheiten in bezug auf das erfindungsgemäße Bekleidungsstück kann auf obige Ausführungsformen zu dem erfindungsgemäßen Adsorptionsfiltermaterial verwiesen werden, welche bezüglich des erfindungsgemäßen Bekleidungsstückes entsprechend gelten.

Weitere Gegenstand der vorliegenden Erfindung - gemäß einem **dritten** Aspekt der vorliegenden Erfindung - ist die Verwendung des Adsorptionsfiltermaterials nach der Erfindung, insbesondere wie zuvor definiert, zur Herstellung von ABC-Schutzbekleidungsstücken zum Tragen auf der Haut als Undergarment (Unterwäsche). Für weitergehende Einzelheiten in bezug auf die erfindungsgemäße Verwendung kann auf obige Ausführungen zu dem erfindungsgemäßen Adsorptionsfiltermaterial verwiesen werden, die bezüglich der erfindungsgemäßen Verwendung entsprechend gelten.

Das erfindungsgemäße Adsorptionsfiltermaterial bzw. die daraus hergestellten Bekleidungsstücke, insbesondere in Form von Schutzbekleidung mit Schutzfunktion gegenüber chemischen Gift- oder Kampfstoffen, sind mit zahlreichen Vorteilen verbunden:
- Aufgrund des spezifischen Aufbaus des erfindungsgemäßen Adsorptionsfiltermaterials nach Art eines "Sandwiches" von vorzugsweise mono- bzw. bielastischen Strick- oder Wirkwaren mit einer zwischen diesen Schichten bzw. Lagen positionierten Schicht aus leichten Sorbenspartikeln, insbesondere leichten, aber hochreaktiven nano- bzw. mikroporösen Aktivkohleteilchen, resultiert eine hohe Elastizität bzw. reversible Dehnbarkeit des erfindungsgemäßen Adsorptionsfiltermaterials, was mit einer guten Tragephysiologie einhergeht, wobei gleichzeitig ein hoher Schutz gegenüber chemischen oder biologischen Gift- bzw. Kampfstoffen gewährleistet wird.
- Das erfindungsgemäße Adsorptionsfiltermaterial kann zu einer Schutzbekleidung verarbeitet werden, die direkt - sozusagen nach Art einer "zweiten Haut" - auf dem Körper getragen werden kann. Aufgrund der hohen Elastizität liegt die aus dem erfindungsgemäßen Adsorptionsfiltermaterial hergestellte Schutzbekleidung direkt auf der Haut, so daß Zwischenräume zwischen Schutzbekleidung und Haut weitgehend vermieden werden, was sowohl den Tragekomfort als auch die Schutzfunktion weiter verbessert, da der zuvor beschriebene "Blasebalgeffekt" auch bei starker körperlicher Aktivität minimiert ist.
- Aufgrund der Gasdurchlässigkeit, insbesondere Luftdurchlässigkeit, und/oder Wasserdampfdurchlässigkeit des erfindungsgemäßen Adsorptionsfiltermaterials kann der Tragekomfort noch weiter gesteigert werden, da beispielsweise Körperschweiß effektiv vom Träger abtransportiert werden kann.
- Das erfindungsgemäße Adsorptionsfiltermaterial weist eine hohe physikalische bzw. chemische Beständigkeit auf, was nicht zuletzt aufgrund der spezifischen Auswahl von diesbezüglich beständigen Fasern realisiert wird.
- Aufgrund der spezifischen Schichtstruktur können die jeweiligen textilen Flächenmaterialien gleich oder jeweils verschieden voneinander ausgebildet werden, so daß die einzelnen Schichten an das jeweilige Anforderungsprofil individuell angepaßt bzw. maßgeschneidert werden können. So kann die im Tragezustand der Haut zugewandte Schicht bzw. das entsprechende textile Flächenmaterial besonders hautfreundlich ausgebildet werden, während beispielsweise die im Tragezustand von der Haut abgewandte Schicht bzw. das entsprechende textile Flächenmaterial mit einer zusätzlichen Schutzfunktion gegenüber toxischen Substanzen ausgerüstet werden kann.
- Insgesamt handelt es sich bei dem erfindungsgemäßen Adsorptionsfiltermaterial um ein leichtes, luftdurchlässiges, weiches und elastisches Material, welches eine verbesserte Tragephysiologie aufweist und für direkt auf dem Körper tragbare ABC-Schutzunterwäsche, verwendet werden kann. Dabei führt die spezifische Materialauswahl zu der leichten, weichen und elastischen Konstruktion bzw. zu dem reduzierten Gewicht, was insgesamt die Tragephysiologie bzw. den Tragekomfort deutlich verbessert.

Weitere Ausgestaltungen, Abwandlungen und Variationen der vorliegenden Erfindung sind für den Fachmann beim Lesen der Beschreibung ohne weiteres erkennbar und realisierbar, ohne daß er dabei den Rahmen der vorliegenden Erfindung verläßt.

Die vorliegende Erfindung wird nachfolgend anhand von Ausführungsbeispielen veranschaulicht, welche die vorliegende Erfindung jedoch keinesfalls beschränken.

### Ausführungsbeispiele:

Es werden vier unterschiedliche Muster von Adsorptionsfiltermaterialien untersucht, nämlich zwei erfindungsgemäße Ausführungsformen sowie zwei Vergleichsadsorptionsfiltermaterialien. Sämtliche Adsorptionsfiltermaterialien weisen einen vergleichbaren Schichtaufbau aus Innenschicht (erstes textiles Flächenmaterial), Adsorptionsschicht auf Basis von Aktivkohle und Außenschicht (zweites textiles Flächenmaterial) auf.

### a) Beispiel 1 (erfindungsgemäß):

Es wird ein Adsorptionsfiltermaterial hergestellt, das ein erstes textiles Flächenmaterial (Carrier) in Form einer Strickware auf Basis von DOW XLA^{®}-Fasern als elastische Faserart und Baumwoll(CO)-Fasern als weitere Faserart aufweist. Das Verhältnis zwischen CO-Fasern und DOW XLA^{®}-Fasern beträgt 88/12. Das Flächengewicht des ersten textilen Flächenmaterials beträgt 120 g/m². Als Klebstoff zwischen dem ersten textilen Flächenmaterial und der Adsorptionsschicht auf Basis von nano- bzw. mikroporöser Aktivkohle wird ein Copolyamidklebstoff mit 10 g/m² eingesetzt. Die nano- bzw. mikroporöse Kohle wird mit 120 g/m² eingesetzt. Als Klebstoff zwischen der Adsorptionsschicht und dem zweiten textilen Flächenmaterial wird ein polyurethanreaktiver Schmelzklebstoff mit 35 g/m² eingesetzt. Als Abdeckung (zweites textiles Flächenmaterial) wird eine Strickware auf Basis von Polyamid(PA)-Fasern und DOW XLA^{®}-Fasern mit einem Flächengewicht von 120 g/m² eingesetzt. Das Verhältnis zwischen PA-Fasern und DOW XLA^{®}-Fasern ist 82/18. Die Materialeigenschaften ergeben sich aus Tabelle 1:

**Tabelle 1**

| **Test** | **Verfahren** | **Einheit** | **Wert** |
|---|---|---|---|
| **Gewicht** | ASTM D 3773 | g/m² | 405 +/- 20 |
| **Dicke** | ASTM D 1777-64 | mm | max. 1,2 |
| **Luftdurchlässigkeit** | ASTM D 737-96 | l/m²s | min. 80 |
| **Berstdruck** | ISO 13938-2 | kPa | min. 130 |
| **Elastische Dehnbarkeit bei 20 N** | DIN 53835-14 | Länge/Breite % | min. 15/35 |
| **Biegesteifigkeit** | ASTM D-1388 | Länge/Breite mg•cm | max. 800/600 |
| **Schrumpfen beim Waschen** | ATTCC 135 | Länge/Breite % | 5/5 |

Die verwendete nano- bzw. mikroporöse Aktivkohle weist einen Mikroporenanteil von mindestens 60 % auf.

Das erfindungsgemäße Adsorptionsfiltermaterial gemäß Beispiel 1 weist eine hervorragende Elastizität und geringe Biegesteifigkeit bei gleichzeitig hohem Berstdruck auf. Zudem verfügt das erfindungsgemäße Material über eine sehr gute Luftdurchlässigkeit. Das erfindungsgemäße Adsorptionsfiltermaterial gemäß Beispiel 1 eignet sich beispielsweise zur Herstellung von Unterwäsche.

### b) Beispiel 2 (erfindungsgemäß):

Es wird ein weiteres erfindungemäßes Adsorptionsfiltermaterial hergestellt und untersucht. Das erfindungsgemäße Adsorptionsfiltermaterial weist eine Trägerschicht (erstes textiles Flächenmaterial) auf Basis einer Strickware auf, die CO-Fasern und DOW XLA^{®}-Fasern im Verhältnis von 88/12 bei einem Flächengewicht von 110 g/m² aufweist. Zudem verfügt die Trägerschicht über eine antibakterielle Ausrüstung auf Basis einer silberhaltigen Verbindung ("*Silverfinish*"). Als Klebstoff wird in bezug auf die Verbindung zwischen Trägerschicht und Adsorptionsschicht ein polyurethanreaktiver Klebstoff mit 35 g/m² eingesetzt. Die Adsorptionsschicht besteht aus nano- bzw. mikroporöser Aktivkohle mit 120 g/m². Als Klebstoff zwischen Adsorptionsschicht und Abdeckung (zweites textiles Flächenmaterial) wird ein Copolyamid-Klebstoff mit 10 g/m² eingesetzt. Die Abdeckung (zweites textiles Flächenmaterial) ist eine elastische Strickware mit antibakterieller Silberbeschichtung, wobei die Abdeckung CO-Fasern und DOW XLA^{®}-Fasern im Verhältnis von 88/12 aufweist. Die Materialeigenschaften ergeben sich aus Tabelle 2:

**Tabelle 2**

| **Test** | **Methode** | **Einheit** | **Wert** |
|---|---|---|---|
| **Gewicht** | ASTM D 3773 | g/m² | 385 +/- 20 |
| **Dicke** | ASTM D 1777-64 | mm | max. 1,2 |
| **Luftdurchlässigkeit** | ASTM D 737-96 | l/m²s | min. 120 |
| **Berstdruck** | ISO 13938-2 | kPa | min. 130 |
| **Elastische Dehnbarkeit bei 20 N** | DIN 53835-14 | Länge/Breite % | min. 10/25 |
| **Biegefestigkeit** | ASTM D-1388 | Länge/Breite mg•cm | max. 800/600 |

Die verwendete nano- bzw. mikroporöse Aktivkohle weist einen Mikroporenanteil von mindestens 60 % auf.

Somit zeigt auch das erfindungsgemäße Adsorptionsfiltermaterial gemäß Beispiel 2 hervorragende Eigenschaften in bezug auf Elastizität, Biegesteifigkeit, Luftdurchlässigkeit und Berstdruck auf. Darüber hinaus konnte in bezug auf das erfindungsgemäße Adsorptionsfiltermaterial gemäß Beispiel 2 im Rahmen von mikrobiologischen Untersuchungen ein verringertes Bakterienwachstum auf bzw. in dem Material gezeigt werden. Das erfindungsgemäße Beispiel 2 eignet sich beispielsweise zur Herstellung von (Unter-)Handschuhen.

### c) Beispiel 3 (Vergleich):

Es wird ein nichterfindungsgemäßes Adsorptionsfiltermaterial hergestellt, bei dem auf den Einsatz von elastischen Flächenmaterialien verzichtet wird. Zudem wird eine Aktivkohle eingesetzt, die eine Mikroporosität von weniger als 40 % aufweist. Die Dehnbarkeitseigenschaften des Materials sind gegenüber den erfindungsgemäßen Beispielen deutlich verschlechtert und auch die Biegesteifigkeit nimmt deutlich zu. Schließlich ist auch der Berstdruck deutlich verringert. Dies führt dazu, daß das Material gemäß Beispiel 3 weniger flexibel bzw. weniger elastisch ist und bei mechanischer Belastung schneller reißt und sich die Aktivkohle bei Dehnbelastung schneller ablöst.

### d) Beispiel 4 (Vergleichsbeispiel):

Es wird ein Adsorptionsfiltermaterial hergestellt, welches einen zu Beispiel 1 vergleichbaren Aufbau aufweist, wobei jedoch die elastischen Fasern durch Polyurethanfasern ersetzt werden. Das Adsorptionsfiltermaterial gemäß Beispiel 4 weist in bezug auf Elastizität, Biegesteifigkeit, sowie Berstdruck im Vergleich zu den erfindungsgemäßen Beispielen schlechtere Werte auf. Die Chemikalienbeständigkeit, insbesondere gegenüber Kampfstoffen, ist deutlich schlechter als im Fall des erfindungsgemäßen Adsorptionsfiltermaterials; wie nachfolgend noch beschrieben, kommt es bei Einwirkung von Chemikalien, insbesondere Kampfstoffen, zu einer Auflösung bzw. Beschädigung der Polyurethanfasern.

In weiterhin durchgeführten Versuchsreihen wird die hervorragenden Eigenschaften des erfindungsgemäßen Adsorptionsfiltermaterials gemäß Beispielen 1 und 2 im Vergleich zu Produkten des Standes der Technik bestätigt:

### 1. Barrierewirkung gegenüber chemischen Kampfstoffen:

a) Gemäß einer ersten Testreihe wird die Barrierewirkung gegenüber Bis-[2-chlorethyl]-sulfid (synonym auch als Senfgas, Lost oder Gelbkreuz bezeichnet), gemessen nach CRDEC-SP-84010, Methode 2.2, für das erfindungsgemäße Adsorptionsfiltermaterial gemäß Beispiel 1 und dem Vergleichsbeispiel 3 durchgeführt. Während sich in bezug auf das erfindungsgemäße Adsorptionsfiltermaterial eine Barrierewirkung von weniger als 2,5 µg/cm² pro 24 h ergibt, weist das Vergleichsbeispiel 3 einen etwas schlechteren Wert von etwa 3,5 µg/cm² pro 24 h auf.
b) In einem weiteren, unabhängigen Versuchsabschnitt wird die Barrierewirkung des erfindungsgemäßen Adsorptionsfiltermaterials gemäß Beispiel 1 mit einem weiteren Vergleichsbeispiel verglichen, wobei das Vergleichsbeispiel ein Adsorptionsfiltermaterial gemäß der US 2003/0229936 A1 umfaßt. Diesbezüglich wird gemäß der US 2003/0229936 A1 in bezug auf die Adsorptionsschicht ein Aktivkohlegewirk eingesetzt. In einem ersten Schritt wird die Barrierewirkung an den hergestellten Materialien ermittelt. Beide Materialien weisen zunächst eine gute Schutzfunktion bzw. Barrierewirkung gegenüber Senfgas gemäß dem Test nach CRDEC-SP-84010, Methode 2.2, auf. Während das erfindungsgemäße Adsorptionsfiltermaterial nach Beispiel 1 eine Barrierewirkung von weniger als 2,5 µg/cm² pro 24 h aufweist, ergibt sich für das Vergleichbeispiel mit dem Aktivkohlegewirk ein Wert von 6,0 µg/cm² pro 24 h.
   Nachfolgend werden die entsprechenden Adsorptionsfiltermaterialien gemäß dem erfindungsgemäßen Beispiel 1 und dem zuvor beschriebenen Vergleichsbeispiel gemäß der US 2003/0229936 A1, welches ein Aktivkohlegewirk umfaßt, einer starken mechanischen Belastung ausgesetzt. Diesbezüglich werden die Adsorptionsfiltermaterialien sowohl in Quer- als auch in Längsrichtung mit einer einwirkenden Zugkraft von 10 N mehrfach elastisch gedehnt. Anschließend werden die Materialien noch 10mal nach Art des zuvor angegebenen Verfahrens zur Bestimmung des Berstdruckes sozusagen aufgeblasen, wobei diesbezüglich mit einem Druck von 60 kPa aufgeblasen wird. Anschließend werden die so behandelten Adsorptionsfiltermaterialien erneut hinsichtlich ihrer Barrierewirkung untersucht. Während das erfindungsgemäße Adsorptionsfiltermaterial gemäß Beispiel 1 erneut einen hervorragenden Wert von weniger als 2,5 µg/cm² pro 24 h aufweist, zeigt das Vergleichsbeispiel gemäß der US 2003/0229936 A1 mit dem Aktivkohlegewirk diesbezüglich deutlich schlechtere Werte von mehr als 10 µg/cm² pro 24 h. Eine visuelle Untersuchung des Materials zeigt zudem, daß das Aktivkohlegewirk deutliche Schäden aufweist.

### 2. Beständigkeit gegenüber Chemikalien:

In einem weiteren Versuchskomplex wird die Beständigkeit gegenüber Natriumhypochlorit in bezug auf das erfindungsgemäße Beispiel 1 im Vergleich zu dem Vergleichsbeispiel 4, welches die Polyurethanfasern enthält, durchgeführt. Hierzu werden die entsprechenden Adsorptionsfiltermaterialien einer Lösung ausgesetzt, welche 2 g/l Natriumhypochlorit bei einem pH-Wert von 10 enthält. Die Materialien werden der Lösung für einen Zeitraum von 24 h bei 50 °C ausgesetzt. Nach Exposition und Trocknung werden die Materialien einem Berstdrucktest gemäß ISO 13938-2 unterzogen. Während in bezug auf das erfindungsgemäße Material gemäß Beispiel 1 eine Verringerung des Berstdrucks von lediglich etwa 10 % ermittelt wird, zeigt das nichterfindungsgemäße Material gemäß Beispiel 4 einen deutlichen Rückgang des Berstdrucks von mehr als 60 % auf. Diesbezüglich kann in bezug auf das Material gemäß Beispiel 4 bereits visuell eine deutliche Verschlechterung, insbesondere ein Abbau der Fasern, beobachtet werden.

Die vorangehenden Versuche belegen, daß das erfindungsgemäße Adsorptionsfiltermaterial über eine deutlich verbesserte Leistungsfähigkeit sowohl hinsichtlich der Schutzfunktion gegenüber chemischen Kampfstoffen als auch in bezug auf die Elastizität aufweist. Zudem wird durch die Versuche belegt, daß bei den erfindungsgemäßen Adsorptionsfiltermaterialien eine Leistungssteigerung durch den Einsatz von hochmikroporöser Aktivkohle erreicht werden kann.

## Patentansprüche

1. Luftdurchlässiges Adsorptionsfiltermaterial für ABC-Schutzbekleidung zum Tragen auf der Haut als Undergarment (Unterwäsche),
wobei das Adsorptionsfiltermaterial einen mehrschichtigen Aufbau aufweist, wobei der mehrschichtige Aufbau ein erstes luftdurchlässiges textiles Flächenmaterial, ein zweites luftdurchlässiges textiles Flächenmaterial und eine zwischen dem ersten und dem zweiten textilen Flächenmaterial angeordnete Adsorptionsschicht umfaßt, wobei die Adsorptionsschicht diskrete, chemische und/oder biologische Gift- und Schadstoffe, insbesondere Kampfstoffe, adsorbierende Sorbenspartikel auf der Basis von Aktivkohle in Form von Aktivkohleteilchen in Kornform oder Kugelform aufweist, wobei die Sorbenspartikel, an dem ersten textilen Flächenmaterial und/oder dem zweiten textilen Flächenmaterial mittels eines Klebstoffs befestigt sind, wobei der Klebstoff diskontinuierlich auf dem ersten textilen Flächenmaterial und/oder dem zweiten textilen Flächenmaterial aufgetragen ist, wobei das zweite textile Flächenmaterial mit dem ersten textilen Flächenmaterial und/oder den Sorbenspartikeln verbunden ist, so daß ein fester Verbund resultiert, und
wobei das erste textile Flächenmaterial und das zweite textile Flächenmaterial jeweils in mindestens eine Richtung, vorzugsweise in Längs- und Querrichtung, elastisch ausgebildet sind und zumindest im wesentlichen gleiche Elastizitätseigenschaften aufweisen,
**dadurch gekennzeichnet, dass**
das erste textile Flächenmaterial und/oder das zweite textile Flächenmaterial eine Mischung aus mindestens zwei unterschiedlichen Faserarten umfassen, wobei das erste textile Flächenmaterial und/oder das zweite textile Flächenmaterial mindestens eine elastische und/oder reversibel dehnbare Faserart umfassen, wobei die elastische und/oder reversibel dehnbare Faserart eine von Polyurethanfasern verschiedene Faserart ist und ausgewählt ist aus der Gruppe von elastischen Polyolefinfasern, elastischen Polyamidfasern und elastischen Polyesterfasern, und
wobei das Adsorptionsfiltermaterial eine elastische Dehnung in mindestens eine Richtung, vorzugsweise in Längs- und Querrichtung, von mindestens 10 % bei 20 N, bezogen auf das Adsorptionsfiltermaterial und bestimmt gemäß DIN 53835-1, aufweist.

2. Adsorptionsfiltermaterial nach Anspruch 1, **dadurch gekennzeichnet, daß** das erste textile Flächenmaterial und/oder das zweite textile Flächenmaterial als Gewebe, Gewirke, Gestricke, Gelege oder Textilverbundstoffe, insbesondere Vliese, vorzugsweise als Strickware oder Wirkware, ausgebildet sind.

3. Adsorptionsfiltermaterial nach Anspruch 1 oder 2, **dadurch gekennzeichnet, daß** die elastische und/oder reversibel dehnbare Faserart physikalisch und/oder chemisch beständig ist, insbesondere wobei die elastische und/oder reversibel dehnbare Faserart temperaturbeständig und/oder chemikalienbeständig und/oder widerstandsfähig gegenüber Ultraviolett (UV)-Strahlung und/oder Xenonlicht ist.

4. Adsorptionsfiltermaterial nach einem oder mehreren der vorangehenden Ansprüche, **dadurch gekennzeichnet, daß** die elastische und/oder reversibel dehnbare Faserart eine elastische, insbesondere (quer-)vernetzte Polyolefinfaser, vorzugsweise eine elastische, insbesondere (quer-)vernetzte Polyethylen- oder Polypropylenfaser, oder eine elastische Polyamidfaser oder eine elastische Polyesterfaser ist.

5. Adsorptionsfiltermaterial nach einem oder mehreren der vorangehenden Ansprüche, **dadurch gekennzeichnet, daß** die elastische und/oder reversibel dehnbare Faserart polyolefinbasiert ist, insbesondere wobei die elastische und/oder reversibel dehnbare Faserart eine Faser auf Basis eines Ethylen/Olefin-Copolymers ist.

6. Adsorptionsfiltermaterial nach einem oder mehreren der vorangehenden Ansprüche, **dadurch gekennzeichnet, daß** das erste textile Flächenmaterial und/oder das zweite textile Flächenmaterial die elastischen und/oder reversibel dehnbare Faserart in einer Menge von 5 bis 30 Gew.-%, insbesondere 7 bis 25 Gew.-%, vorzugsweise 8 bis 20 Gew.-%, bezogen auf das jeweilige textile Flächenmaterial, aufweist.

7. Adsorptionsfiltermaterial nach einem oder mehreren der vorangehenden Ansprüche, **dadurch gekennzeichnet, daß** das erste textile Flächenmaterial und/oder das zweite textile Flächenmaterial neben der elastischen und/oder reversibel dehnbaren Faserart mindestens eine weitere Faserart, insbesondere Textilfasern, aufweisen, insbesondere wobei die weitere Faserart, die in Mischung mit der elastischen und/oder reversibel dehnbaren Faserart vorliegt, natürliche Fasern, vorzugsweise Baumwollfasern (CO), und/oder chemische Fasern, vorzugsweise synthetische Fasern, insbesondere ausgewählt aus der Gruppe von Polyestern (PES); Polyolefinen, insbesondere Polyethylen (PE) und/oder Polypropylen (PP), Polyvinylchlorid (CLF); Polyvinylidenchlorid (CLF); Acetat (CA); Triacetat (CTA); Polyacryl (PAN); Polyamid (PA), insbesondere aromatischen, vorzugsweise flammfesten Polyamiden; Polyvinylalkohol (PVAL); Polyurethanen; Polyvinylestern; (Meth-)Acrylaten; sowie deren Mischungen, vorzugsweise Polyamid (PA), umfaßt.

8. Adsorptionsfiltermaterial nach einem oder mehreren der vorangehenden Ansprüche, **dadurch gekennzeichnet, daß** der Klebstoff auf dem ersten textilen Flächenmaterial und/oder dem zweiten textilen Flächenmaterial in einer Auftragsmenge von 20 bis 40 g/m² aufgetragen ist und/oder insbesondere wobei der Klebstoff das erste textile Flächenmaterial und/oder das zweite textile Flächenmaterial zu höchstens 70 %, insbesondere höchstens 60 %, vorzugsweise höchstens 50 %, bevorzugt höchstens 40 %, besonders bevorzugt höchstens 30 %, bedeckt.

9. Adsorptionsfiltermaterial nach einem oder mehreren der vorangehenden Ansprüche, **dadurch gekennzeichnet, daß** die Gas- bzw. Luftdurchlässigkeit des Adsorptionsfiltermaterials 40 bis 250 l·m⁻²·s⁻¹, insbesondere mindestens 50 l·m⁻²·s⁻¹, vorzugsweise mindestens 80 l·m⁻²·s⁻¹, besonders bevorzugt mindestens 100 l·m⁻²·s⁻¹, und/oder bis zu 1.000 l·m⁻²·s⁻¹ bei einem Strömungswiderstand von 127 Pa beträgt.

10. Adsorptionsfiltermaterial nach einem oder mehreren der vorangehenden Ansprüche, **dadurch gekennzeichnet, daß** das Adsorptionsfiltermaterial eine elastische Dehnung in mindestens eine Richtung, vorzugsweise in Längs- und Querrichtung, von mindestens 15 %, vorzugsweise mindestens 20 %, bevorzugt mindestens 25 %, besonders bevorzugt mindestens 30 %, ganz besonders bevorzugt mindestens 35 %, bei 20 N und bezogen auf das Adsorptionsfiltermaterial, aufweist.

11. Adsorptionsfiltermaterial nach einem oder mehreren der vorangehenden Ansprüche, **dadurch gekennzeichnet, daß** der mittlere Durchmesser der Sorbenspartikel, insbesondere der Aktivkohleteilchen, 0,01 bis 2 mm, vorzugsweise 0,05 bis 1 mm, bevorzugt 0,1 bis 0,5 mm, beträgt.

12. Adsorptionsfiltermaterial nach einem oder mehreren der vorangehenden Ansprüche, **dadurch gekennzeichnet, daß** die Aktivkohle eine Aktivkohle mit einem großen Mikroporenvolumenanteil, bezogen auf das Gesamtporenvolumen der Aktivkohle, ist und/oder daß die Aktivkohle eine Aktivkohle mit einem Anteil des Mikroporenvolumens, bezogen auf das Gesamtporenvolumen der Aktivkohle, von mindestens 60 %, insbesondere mindestens 65 %, bevorzugt mindestens 70 %, ist.

13. ABC-Schutzbekleidungsstück Tragen auf der Haut als Undergarment (Unterwäsche), aufweisend ein Adsorptionsfiltermaterial nach einem oder mehreren der vorangehenden Ansprüche, und/oder hergestellt unter Verwendung eines Adsorptionsfiltermaterials nach einem oder mehreren der vorangehenden Ansprüche.

14. Verwendung eines Adsorptionsfiltermaterials nach einem oder mehreren der Ansprüche 1 bis 12 zur Herstellung von ABC-Schutzbekleidungsstücken zum Tragen auf der Haut als Undergarment (Unterwäsche).

## Claims

1. An air-permeable adsorption filter material for NBC protective clothing to be worn on the skin as an undergarment (underwear)
wherein the adsorption filtering material has a multilayer structure,
wherein the multilayer structure comprises a first air-permeable textile material, a second air-permeable textile material and an adsorption layer arranged between the first and second textile sheet materials,
wherein the adsorption layer comprises discrete grain-shaped or spherical-shaped adsorbing sorbent particles based on activated carbon to adsorb chemical and/or biological poisons and pollutants, in particular warfare agents,
wherein the sorbent particles are fixed to the first textile sheet material and/or the second textile sheet material by an adhesive,
wherein the adhesive first batch is applied discontinuously on the textile sheet material and/or the second textile sheet material,
wherein the second textile sheet material is connected to the first textile sheet material and/or the sorbent particles to give a strong bond, and
wherein the first textile sheet material and the second textile sheet material are respectively preferably elastically-formed in at least one direction in the longitudinal and transverse directions and exhibit at least substantially the same elastic properties,
**characterized in that**
the first textile sheet material and/or the second textile sheet material comprise(s) a mixture of at least two different kinds of fiber,
wherein the first textile sheet material and/or the second textile sheet material consist(s) of at least one elastic and/or reversibly stretchable fiber type,
wherein the elastic and/or reversibly stretchable fiber type is a different type of fiber from polyurethane fiber and is selected from the group of elastic polyolefin fibers, polyamide elastic fibers and elastic polyester fibers, and
wherein the adsorption filter offers an elastic extension in at least one direction, preferably in the longitudinal and transverse directions, of at least 10% at 20 N, based on the adsorption filter material and determined in accordance with DIN 53835-1.

2. Adsorption filter material according claim 1,
**characterized in that**
the first textile sheet material and/or the second textile sheet material is formed as woven, knitted, crocheted or textile composites, in particular nonwovens, preferably as knitwear or knitted goods.

3. Adsorption filter material according to claim 1 or 2,
**characterized in that**
the elastic and/or reversibly stretchable fiber type is physically and/or chemically resistant, in particular wherein the elastic and/or reversibly stretchable fiber type is temperature resistant and/or chemical-resistant and/or resistant to ultraviolet (UV) radiation and/or xenon light.

4. Adsorption filter material according to one or more of the preceding claims,
**characterized in that**
the elastic and/or reversibly stretchable fiber type is, in particular, an elastic (transverse) cross-linked polyolefin fiber, preferably an elastic, in particular (transverse) cross-linked polyethylene or polypropylene fiber, or a elastic polyamide fiber or polyester elastic fiber.

5. Adsorption filter material according to one or more of the preceding claims,
**characterized in that**
the elastic and/or reversibly stretchable fiber type is polyolefin-based, in particular wherein the elastic and/or reversibly stretchable type of fiber is a fiber based on an ethylene/olefin copolymer.

6. Adsorption filter material according to one or more of the preceding claims,
**characterized in that**
the first textile sheet material and/or the second textile sheet material comprise(s) the elastic and/or reversibly stretchable fiber type in an amount of 5 to 30 wt.-%, especially 7 to 25 wt.-%, preferably 8 to 20 wt.-%, based on the respective textile sheet material.

7. Adsorption filter material according to one or more of the preceding claims,
**characterized in that**
the first textile sheet material and/or the second textile sheet material comprises, in addition to the elastic and/or reversibly stretchable fiber type, at least one other type of fiber, in particular a textile fiber, in particular wherein the further type of fiber in the mixture with the elastic and/or reversibly stretchable fiber type is a natural fiber, preferably cotton fiber (CO), and/or chemical fiber, preferably synthetic fiber, in particular selected from the group of polyesters (PES); polyolefins, in particular polyethylene (PE) and/or polypropylene (PP), polyvinyl chloride (CLF); polyvinylidene chloride (CLF); acetate (CA); triacetate (CTA); polyacrylic (PAN); polyamide (PA), in particular aromatic, preferably flame-resistant polyamides; polyvinyl alcohol (PVAL); polyurethanes; polyvinyl esters; (meth-) acrylates; and mixtures thereof, preferably polyamide (PA).

8. Adsorption filter material according to one or more of the preceding claims,
**characterized in that**
the adhesive is applied to the first textile sheet material and/or the second textile sheet material in an application quantity of 20 to 40 g/m² and/or in particular wherein the adhesive covers to an extent of the first textile sheet material and/or the second textile sheet material to at most 70%, especially at most 60%, preferably at most 50%, more preferably at most 40%, particularly preferably at most 30%.

9. Adsorption filter material according to one or more of the preceding claims,
**characterized in that**
the gas or air permeability of the adsorption filter material amounts to 40 to 250 l·m⁻²·s⁻¹ particular at least 50 l·m⁻²·s⁻¹, preferably at least 80 l·m⁻²·s⁻¹, preferably at least 100 l·m⁻²·s⁻¹, and/or up to 1,000 l·m⁻²·s⁻¹, with a flow resistance of 127 Pa.

10. Adsorption filter material according to one or more of the preceding claims,
**characterized in that**
the adsorption filter material comprises an elastic extension in at least one direction, preferably in the longitudinal and transverse direction of at least 15%, preferably at least 20%, more preferably at least 25%, even more preferably at least 30%, most preferably at least 35% at 20 N, based on the adsorption filter material.

11. Adsorption filter material according to one or more of the preceding claims,
**characterized in that**
the mean diameter of the sorbent particles, in particular the activated carbon particles, is 0.01 to 2 mm, preferably 0.05 to 1 mm, more preferably 0.1 to 0.5 mm.

12. Adsorption filter material according to one or more of the preceding claims,
**characterized in that**
the activated carbon is an activated carbon having a large micropore volume fraction, based on the total pore volume of the activated carbon, and/or that the activated carbon is an activated carbon with a fraction of the micropore volume, based on the total pore volume of the activated carbon of at least 60%, especially at least 65%, preferably at least 70%.

13. NBC protective garment worn on the skin as an undergarment (underwear) comprising an adsorption filter material according to one or more of the preceding claims, and/or produced using an adsorption filter material according to one or more of the preceding claims,

14. Use of an adsorption filter material according to one or more of the claims 1 to 12 for the production of NBC protective clothing to be worn on the skin as an undergarment (underwear).

## Revendications

1. Matériau filtrant adsorbant perméable à l'air pour un vêtement de protection ABC destiné à être porté sur la peau en tant qu'undergarment (sous-vêtement), le matériau filtrant adsorbant présentant une structure multicouche, la structure multicouche comprenant un premier matériau textile bidimensionnel perméable à l'air, un deuxième matériau textile bidimensionnel perméable à l'air et une couche adsorbante disposée entre le premier et le deuxième matériaux textiles bidimensionnels, la couche adsorbante comprenant des particules sorbantes discrètes, à base de charbon actif sous forme de particules de charbon actif sous forme granulaire ou sphérique, particules qui adsorbent les poisons et polluants chimiques et/ou biologiques, en particulier les agents chimiques de guerre, les particules sorbantes étant fixées au premier matériau textile bidimensionnel et/ou au deuxième matériau textile bidimensionnel à l'aide d'un adhésif, l'adhésif étant appliqué d'une manière discontinue sur le premier matériau textile bidimensionnel et/ou sur le deuxième matériau textile bidimensionnel, le deuxième matériau textile bidimensionnel étant assemblé au premier matériau textile bidimensionnel et/ou aux particules sorbantes, de façon qu'il en résulte un composite solide, et dans lequel le premier matériau textile bidimensionnel et le deuxième matériau textile bidimensionnel ont chacun une configuration élastique dans au moins une direction, de préférence dans la direction longitudinale et dans la direction transversale, et présentent au moins pour l'essentiel les mêmes propriétés d'élasticité, **caractérisé en ce que** le premier matériau textile bidimensionnel et le deuxième matériau textile bidimensionnel comprennent un mélange d'au moins deux types de fibres différents, le premier matériau textile bidimensionnel et/ou le matériau textile bidimensionnel comprenant au moins un type de fibres élastiques et/ou pouvant subir un allongement réversible, le type de fibres élastiques et/ou pouvant subir un allongement réversible étant un type de fibres différent des fibres de polyuréthanne et étant choisi dans le groupe des fibres de polyoléfine élastiques, les fibres de polyamide élastiques et les fibres de polyester élastiques, le matériau filtrant adsorbant présentant un allongement élastique dans au moins une direction, de préférence dans la direction longitudinale et dans la direction transversale, d'au moins 10 % sous 20 N, par rapport au matériau filtrant adsorbant, et déterminé selon DIN 53835-1.

2. Matériau filtrant adsorbant selon la revendication 1, **caractérisé en ce que** le premier matériau textile bidimensionnel et/ou le deuxième matériau textile bidimensionnel sont configurés comme des tissus, des tricots, des articles maillés, des grilles ou des matériaux composites textiles, en particulier des non-tissés, de préférence des articles tricotés ou de bonneterie.

3. Matériau filtrant adsorbant selon la revendication 1 ou 2, **caractérisé en ce que** le type de fibre élastique et/ou pouvant subir un allongement réversible présente une résistance physique et/ou chimique, en particulier le type de fibre élastique et/ou pouvant subir un allongement réversible présentant une résistance à la température et/ou une résistance aux agents chimiques, et/ou pouvant résister à un rayonnement ultraviolet (UV) et/ou à une lumière au xénon.

4. Matériau filtrant adsorbant selon l'une des revendications précédentes, **caractérisé en ce que** le type de fibre élastique et/ou pouvant subir un allongement réversible est une fibre de polyoléfine élastique, en particulier réticulée (à réticulation transversale), de préférence une fibre de polyéthylène ou de polypropylène élastique, en particulier réticulée (à réticulation transversale), ou une fibre de polyamide élastique ou une fibre de polyester élastique.

5. Matériau filtrant adsorbant selon l'une ou plusieurs des revendications précédentes, **caractérisé en ce que** le type de fibre élastique et/ou pouvant subir un allongement réversible est à base d'une polyoléfine, en particulier le type de fibre élastique et/ou pouvant subir un allongement réversible étant une fibre à base d'un copolymère éthylène/oléfine.

6. Matériau filtrant adsorbant selon l'une ou plusieurs des revendications précédentes, **caractérisé en ce que** le premier matériau textile bidimensionnel et/ou le deuxième matériau textile bidimensionnel comprennent le type de fibre élastique et/ou pouvant subir un allongement réversible en une quantité de 5 à 30 % en poids, en particulier de 7 à 25 % en poids, de préférence de 8 à 20 % en poids, par rapport à chaque matériau textile bidimensionnel.

7. Matériau filtrant adsorbant selon l'une ou plusieurs des revendications précédentes, **caractérisé en ce que** le premier matériau textile bidimensionnel et/ou le deuxième matériau textile bidimensionnel comprennent, outre le type de fibre élastique et/ou pouvant subir un allongement réversible, au moins un type de fibre supplémentaire, en particulier des fibres textiles, en particulier dans lequel le type de fibre supplémentaire, qui se présente en mélange avec le type de fibre élastique et/ou pouvant subir un allongement réversible, comprenant des fibres naturelles, de préférence des fibres de coton (CO) et/ou des fibres chimiques, de préférence des fibres synthétiques, en particulier choisies dans le groupe des polyesters (PES) ; des polyoléfines, en particulier le polyéthylène (PE) et/ou le polypropylène (PP), le poly(chlorure de vinyle) (CLF) ; du poly(chlorure de vinylidène (CLF) ; de l'acétate (CA) ; du triacétate (CTA) ; du polyacrylique (PAN) ; du polyamide (PA), en particulier les polyamides aromatiques, de préférence résistant à la flamme ; du poly(alcool vinylique) (PVAL) ; des polyuréthannes ; des polyvinylesters ; des (méth)acrylates ; ainsi que des mélanges de ceux-ci, de préférence le polyamide (PA).

8. Matériau filtrant adsorbant selon l'une ou plusieurs des revendications précédentes, **caractérisé en ce que** l'adhésif est appliqué sur le premier matériau textile bidimensionnel et/ou sur le deuxième matériau textile bidimensionnel selon une quantité d'application de 20 à 40 g/m², et/ou en particulier dans lequel l'adhésif recouvre le premier matériau textile bidimensionnel et/ou le deuxième matériau textile bidimensionnel à raison d'au plus 70 %, en particulier d'au plus 60 %, de préférence d'au plus 50 %, préférentiellement d'au plus 40 %, d'une manière particulièrement préférée d'au plus 30 %.

9. Matériau filtrant adsorbant selon l'une ou plusieurs des revendications précédentes, **caractérisé en ce que** le perméabilité aux gaz ou à l'air du matériau filtrant adsorbant est de 40 bis 250 l · m⁻² · s⁻¹, en particulier d'au plus 50 l · m⁻² · s⁻¹, de préférence d'au moins 80 l · m⁻² · s⁻¹, d'une manière particulièrement préférée d'au moins 100 l · m⁻² · s⁻¹, et/ou jusqu'à 1.000 l · m⁻² s⁻¹ pour une résistance à l'écoulement de 127 Pa.

10. Matériau filtrant adsorbant selon l'une ou plusieurs des revendications précédentes, **caractérisé en ce que** le matériau filtrant adsorbant présente une un allongement élastique dans au moins une direction, de préférence dans la direction longitudinale et dans la direction transversale, d'au moins 15 %, de préférence d'au moins 20 %, préférentiellement d'au moins 25 %, d'une manière particulièrement préférée d'au moins 30 %, d'une manière tout particulièrement préférée d'au moins 35 %, à 20 N et par rapport au matériau filtrant adsorbant.

11. Matériau filtrant adsorbant selon l'une ou plusieurs des revendications précédentes, **caractérisé en ce que** le diamètre moyen des particules sorbantes, en particulier des particules de charbon actif, est de 0,01 à 2 mm, de préférence de 0,05 à 1 mm, préférentiellement de 0,1 à 0,5 mm.

12. Matériau filtrant adsorbant selon l'une ou plusieurs des revendications précédentes, **caractérisé en ce que** le charbon actif est un charbon actif ayant une proportion volumique élevée des micropores, par rapport au volume total des pores du charbon actif, et/ou que le charbon actif est un charbon actif ayant une proportion volumique des micropores, rapportée au volume total des pores du charbon actif, d'au moins 60 %, en particulier d'au moins 65 %, préférentiellement d'au moins 70 %.

13. Pièce de vêtement de protection ABC, à porter sur la peau en tant qu'undergarment (sous-vêtement), comprenant un matériau filtrant adsorbant selon l'une ou plusieurs des revendications précédentes et/ou fabriqué par utilisation d'un matériau filtrant adsorbant selon l'une ou plusieurs des revendications précédentes.

14. Utilisation d'un matériau filtrant adsorbant selon l'une ou plusieurs des revendications 1 à 12 pour fabriquer des pièces de vêtements de protection ABC destinées à être portées sur la peau en tant qu'undergarment (sous-vêtement).
